# EUROPÄISCHE PATENTANMELDUNG

(11) **EP 3 135 972 A1**
(43) Veröffentlichungstag der Anmeldung: **01.03.2017**
(21) Anmeldenummer: 16001422.1
(22) Anmeldetag: 24.06.2016
(51) Int. Cl.: F16L 5/02, F16L 5/12, B60R 16/02, F16L 5/00

(54) **WANDDURCHFÜHRUNGSELEMENT**

(30) Priorität: 24.08.2015 DE 202015005851 U
(71) Anmelder: Titgemeyer Holding GmbH & Co. KG, 49084 Osnabrück (DE)
(72) Erfinder: Titgemeyer, Gerd-Christian, 49086 Osnabrück (DE); Titgemeyer, Manfred, 49076 Osnabrück (DE)
(74) Vertreter: Pott, Ulrich

(57) **Zusammenfassung**

Die Erfindung betrifft ein Wanddurchführungselement 2, beispielsweise für Schottwände, Tankwände, Behälterwände und dergleichen Bauteile 1 zur Verbindung von insbesondere Leitungen, Rohren oder dergleichen Teilen zur Führung von festen, flüssigen oder gasförmigen Medien, Kabeln, Seilzügen oder dergleichen, mit zumindest einem Innen- 7, 8 und/oder Außengewinde und/oder Steckanschluss 9 versehenen Anschlussbereich 3, auf den sich ein Zwischenbereich 10 ausschließt, an dem Befestigungselemente 5, 13 festgelegt sind, zwischen denen das Bauteil 1 festlegbar ist, wobei an dem Wanddurchführungselement 2 ein umlaufener Kragen als erstes Befestigungselement 5 angeformt ist, und dass der Zwischenbereich 10 eine plastisch verformbare Stauchzone aufweist, aus der durch Krafteinleitung auf die Stauchzone ein weiteres Befestigungselement 13 mit Abstand zum ersten Befestigungselement 5 durch Stauchung ausgebildet ist, so dass zwischen dem ersten 5 und dem durch Stauchung gebildeten zweiten Befestigungselement 13 das Bauteil 1 abzustützen ist (Fig. 2).

## Beschreibung

Die Erfindung bezieht sich auf ein Wanddurchführungselement, beispielsweise für Schottwände, Tankwände, Behälterwände und dergleichen Bauteile, zur bauteilhindurchtretenden Verbindung oder Führung von insbesondere Leitungen, Rohren und dergleichen Teilen zur Aufnahme von festen, flüssigen oder gasförmigen Medien, Kabeln, Seilzügen oder dergleichen, mit zumindest einem mit einem Innen- und/oder Außengewinde und/oder Steckanschluss versehenen Anschlussbereich und einem Zwischenbereich an dem Befestigungselemente festgelegt sind, zwischen denen das Bauteil abstützbar ist.

Wanddurchführungselemente sind allgemein bekannt und dienen dazu, als bauteilhindurchtretende Verbindungsteile Vorrichtungen wie Leitungen, Kabel etc. durch ein Wanddungsteil hindurchzuführen, indem zum Beispiel eine vor dem Wandungsteil ankommende Leitung an das Wandführungselement angeschlossen wird, das durch die Leitung strömende Medium von dem Element durch die Wand geführt wird und danach dem an einem anderen Ende des Elementes angeschlossenen Leitungsstrang zugeführt wird. Es können auch Kabel, Seilzüge und dergleichen durch ein Wandführungselement hindurchgeführt werden. Derartige Wandführungselemente sind als Schottverschraubungen, Tankverschraubungen, Behälterdurchführungen etc. bekannt.

Üblicherweise haben derartige Wanddurchführungselemente wie beispielsweise Schott- oder Tankverschraubungen jeweils zwei Anschlussbereiche und einen zwischen den Anschlussbereichen gelegenen Zwischenbereich. Nicht nur die beiden Anschlussbereiche haben ein Außen- bzw. Innengewinde, an dem zum Beispiel Anschlussverbindungen festzulegen sind. Auch der Zwischenbereich ist herkömmlicherweise mit einem Außengewinde versehen, so dass auf dieses Außengewinde zunächst eine Mutter aufzuschrauben ist. Alternativ kann auch ein Festsitz vorgesehen sein. Das Wanddurchführungselement ist durch ein Loch in dem Wandungsteil hindurchzustecken und von der anderen Seite ist eine Gegenmutter auf den Zwischenbereich aufzuschrauben, so dass die Schottwandung oder die Behälterwandung zwischen den beiden Befestigungselementen eingeklemmt werden kann; beziehungsweise ist das Wanddurchführungselement mit dieser Wandung als Bauteil zu verspannen ist. Dies erfordert allerdings, dass das Wanddurchführungselement von zwei Seiten her zugänglich ist, was in vielen Fällen nicht zur Verfügung steht. Dies ist beispielsweise der Fall, wenn ein geschlossener Tank mit einer Tankverschraubung zu versehen ist, wo allerdings vom Tankinneren her das Wanddurchführungselement kaum zugänglich ist, so dass eine entsprechende Kontermutter auf einem mit einem Außengewinde versehenen Zwischenbereich mit einem vertretbaren Montageaufwand nur unter sehr erschwerten Bedingungen montiert werden kann.

Es ist Aufgabe der vorliegenden Erfindung, ein Wanddurchführungselement zur Verfügung zu stellen, das mit einem verminderten Montageaufwand an einem Bauteil, insbesondere auch an Schottwänden, Tankbehälterwänden, Behälterwänden und dergleichen Bauteilen, zu montieren ist.

Zur Lösung dieser Aufgabe zeichnet sich das Wanddurchführungselement der eingangs genannten Art dadurch aus, dass an dem Wanddurchführungselement ein umlaufender Kragen (z.B. ein Setzkopf), als erstes Befestigungselement angeformt ist und dass der Zwischenbereich eine plastisch verformbare Stauchzone aufweist, aus der durch Krafteinleitung auf die Stauchzone ein weiteres Befestigungselement mit Abstand zum ersten Befestigungselement durch Stauchung geformt ist, also insbesondere ein Schließkopf durch plastische Umformung gebildet ist, so dass zwischen dem ersten und dem durch Stauchung gebildeten zweiten Befestigungselement das Bauteil abzustützen ist.

Damit ist ein Wanddurchführungselement geschaffen, das in eine Ausnehmung zum Beispiel einer Wand eingeführt werden kann und dessen umlaufender Kragen als erstes Befestigungselement an eine Außenseite der Wand angelegt werden kann. Der sich daran anschießende Zwischenbereich erstreckt sich durch die Lochausnehmung hindurch. Von der Montageseite, also der Seite der Wand, an der der umlaufende Kragen an dem Bauteil anliegt, kann eine Kraft auf die Stauchzone des Zwischenbereiches eingeleitet werden, so dass durch Stauchung auf der dem ersten Befestigungselement (Setzkopf) gegenüberliegenden Bauteilseite ein weiteres Befestigungselement (Schließkopf) geformt wird, zwischen denen die Wand gelegen ist. Dieses zweite Befestigungselement wird in der Regel durch umgebogene und nach der Stauchung aneinanderliegende Wandbereiche des Zwischenbereiches mit in wesentlicher U-förmiger Gestalt gebildet

Dazu kann ein Außengewinde an dem einen Außenumfang eines Ausschlussbereiches vorgesehen sein, aber auch bevorzugterweise ein Innengewinde, das von dem einen Anschlussbereich hinein bis in die Stauchzone eines inneren Führungskanals in dem Zwischenbereich hineinreicht, so dass auch dort ein mit einem Gewinde versehenes Stauchwerkerzeug eingebracht werden kann, um durch eine entsprechende Zugkraft eine plastische Verformung des Zwischenbereiches durch Stauchung und Herausformen des weiteren umlaufenden Befestigungselementes zu erzeugen, so dass dadurch das Wanddurchführungselement sicher an dem Bauteil, beispielsweise an einer Tankwandung festgelegt werden kann. Im Falle zum Beispiel einer Tankwandung muss der zweite Anschlussbereich nicht mit einem Gewinde versehen sein, da sich dort vielfach eine weitere Leitung nicht anschließt. In einem solchen Fall kann dies auch ein einfacherer Auslass sein, so dass im Tankinneren an diesem Auslass auch nicht mehr montageseitig Arbeiten erforderlich sind.

In anderen Anwendungsfällen, beispielsweise bei einer Schottverschraubung, ist der entsprechende Stauchvorgang ebenfalls mit sehr einfachen Mitteln und mit einfachen Setz- bzw. Stauchwerkzeugen zu vollziehen. Dabei können auch zu beiden Seiten des Wanddurchführungselementes mit Innen- und/oder Außengewinden und/oder Steckanschluss versehene Anschlussbereiche vorgesehen sein. Auch können hier Setzwerkzeuge wahlweise von der einen oder von der anderen Seite des Wanddurchführungselementes angesetzt werden, um das weitere Befestigungselement durch plastische Verformung des Zwischenbereiches zu bilden. Dazu können die Anschlussbereiche wahlweise mit einem Innengewinde, wahlweise jeweils mit einem Außengewinde aber auch wahlweise mit einem Innen- und mit einem Außengewinde und/oder mit einem Steckanschluss versehen sein.

Weitere vorteilhafte Ausgestaltungen der Erfindung ergeben sich aus weiteren Unteransprüchen, der nachfolgenden Beschreibung und der Zeichnung. In der Zeichnung zeigen
- Fig. 1: eine Ansicht auf eine Schottwand als Ausführungsbeispiel eines Bauteils, das mit einem Wanddurchführungselement versehen ist, wobei die in der Zeichnung linke Darstellung das Wanddurchführungselements im ungesetzten Zustand zeigt und das rechte Wanddurchführungselement in einem gesetzten Zustand gezeigt ist, wobei es sich hierbei um ein Ausführungsbeispiel handelt, bei dem im Zwischenbereich kein Innengewinde vorgesehen ist;
- Fig. 2: das Ausführungsbeispiel nach Fig. 1 gemäß der Schnittlinie A-A in Fig. 1;
- Fig. 3: eine zu Fig. 1 analoge Darstellung eines alternativen Ausführungsbeispiels; und
- Fig. 4: eine Schnittdarstellung des Ausführungsbeispiels nach Fig. 3 gemäß Schnittlinie A-A, wiederum im umgesetzten Zustand (links) und im gesetzten Zustand (rechts) mit einem oberen Anschluss und einem sich daran anschließenden Zwischenbereich mit einem durchgehenden Innengewinde im ungesetzten Zustand.

In der Zeichnung sind grundsätzlich übereinstimmende Teile mit übereinstimmenden Bezugsziffern versehen.

Allgemein mit 1 ist in der Zeichnung ein Bauteil beziffert, das eine Schottwandung in dem gezeigten Ausführungsbeispiel sein soll, wie sie beispielsweise in Nutzfahrzeugaufbauten Verwendung finden kann. Diese Schottwandung 1 soll von einer Leitung durchsetzt werden, die an die Schottwandung 1 heranzuführen ist und von dieser wegzuführen ist. Dazu ist das allgemein mit 2 bezifferte Wanddurchführungselement vorgesehen, dass im Allgemeinen Sprachtum herkömmlicherweise als Schottverschraubung bezeichnet wurde.

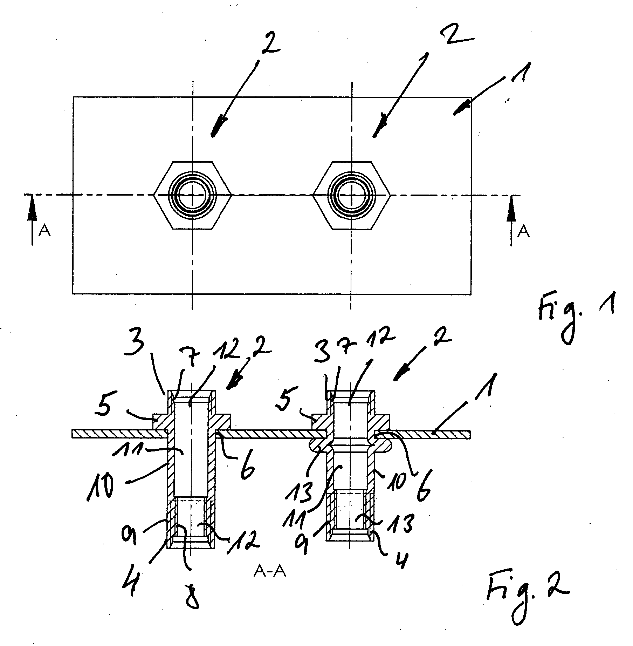

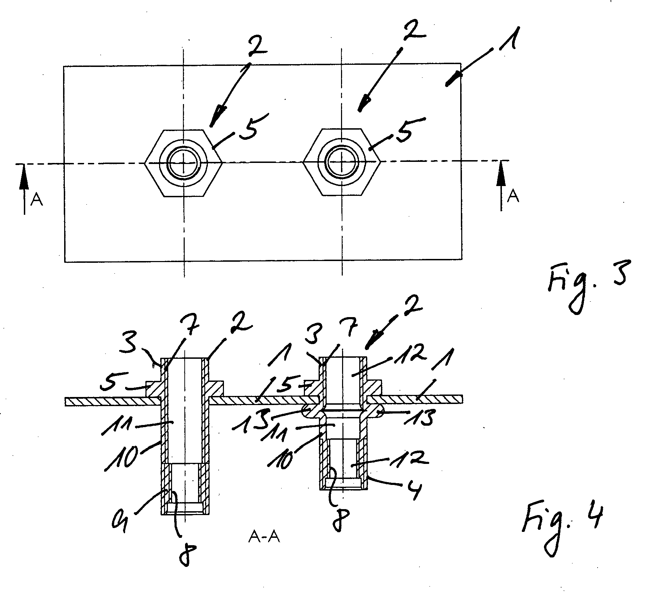

In den Figuren, besonders deutlich in den Figuren 2 und 4, ist das Wanddurchführungselement 2 in der Darstellung links jeweils im umgesetzten Zustand und jeweils rechts im gesetzten Zustand dargestellt. In dem Ausführungsbeispiel nach Fig. 2 hat das Wanddurchführungselement 2 zwei Anschlussbereiche 3 und 4 an den jeweils gegenüberliegenden Endbereichen. An den Anschlussbereich oben, also an dem Anschlussbereich 3 schließt sich ein umlaufener Kragen als erstes Befestigungselement 5 an. Wie in der linken Darstellung gezeigt, ist das Wanddurchführungselement 2 durch eine Lochausnehmung 6 in dem Bauteil 1 hindurchgesteckt und liegt mit seinem ersten Befestigungselement 5, also dem umlaufenen Kragen an einer Außenfläche des Bauteils 1 an. Ein anderes Befestigungselement ist hier noch nicht ausgebildet. Der obere Anschlussbereich 3 hat ein Innengewinde 7. Der untere Anschlussbereich hat ein Innengewinde 8 und ein Außengewinde 9. Des Weiteren ist jeweils ein Zwischenbereich 10 vorgesehen, der eine Stauchzone aufweist. Das Wandführungselement 1 kann in dem Zwischenbereich 10 aus einer ausgewählten Materialzusammensetzung bestehen oder besonders metallurgisch behandelt sein, um eine optimale Stauchzone auszubilden zur Herausformung des weiteren Befestigungselementes 13. Dieser Zwischenbereich 10 hat einen inneren Führungskanal 11, wobei die Anschlussbereiche 3 ebenfalls jeweils einen inneren Führungskanal 12 aufweisen. Der innere Führungskanal 12 des unteren Anschlussbereiches 4 hat einen kleineren inneren Durchmesser als der innere Führungskanal 11 des Zwischenbereiches 10. Somit greift das Innengewinde 8 des unteren Anschlussbereiches 4 bis in den Zwischenbereich 10.

Nach Ansetzen eines Setzwerkzeuges ist durch Einleitung einer Kraft bei entsprechender Gegenkraft an dem Anschlussbereich 3 und/oder dem Kragen (Setzkopf) 5 die Stauchzone des Zwischenbereiches 10 zu stauchen, so dass sich eine Wulst in ein eine wesentliche U-förmige Gestalt als zweites Befestigungselement (Schließkopf) 13 durch plastische Verformung des Zwischenbereiches 10 ergibt, die in der Fig. 2 die Bezugsziffer 13 trägt und nunmehr in der anderen Außenfläche des Bauteils 1 anliegt und das zweite Befestigungselement 13 bildet. Die Wand 1 ist zwischen dem Befestigungselementen 5 und 13 eingeklemmt, so dass das Wanddurchführungselement 2 sicherer an dem Bauteil 1 gehalten ist und an den jeweiligen Anschlussbereichen 3,4 weitere Leitungen angebracht werden können oder in den inneren Führungskanal 12 und 11 sonstige Teile wie Kabel, Seilzüge und dergleichen hindurchzuführen sind.

In dem Ausführungsbeispiel nach den Fig. 3 und 4 ist bei ansonsten analoger Ausbildung das Innengewinde 7 im oberen Anschlussbereich 3 durchgehend bis zum unteren Anschlussbereich 4 ausgebildet, das heißt, dass dieses Innengewinde sich im ungesetzten Zustand auch über den mit der Stauchzone ausgebildeten Zwischenbereich 10 erstreckt. Ein Stauchwerkzeug kann auch in das Innengewinde des Bereiches 8 eingreifen und mithin den Zwischenbereich 10 nach entsprechender Abstützung des Wanddurchführungselementes 2 im oberen Bereich stauchen, so dass es wiederum das zweite Befestigungselement (Schließkopf) 13 ausbildet.

## Patentansprüche

1. Wanddurchführungselement (2), beispielsweise für Schottwände, Tankwände, Behälterwände und dergleichen Bauteile (1) zur Verbindung von insbesondere Leitungen, Rohren oder dergleichen Teilen zur Führung von festen, flüssigen oder gasförmigen Medien, Kabeln, Seilzügen oder dergleichen, mit zumindest einem Innen- (7, 8) und/oder Außengewinde und/oder Steckanschluss (9) versehenen Anschlussbereich (3), auf den sich ein Zwischenbereich (10) ausschließt, an dem Befestigungselemente (5, 13) festgelegt sind, zwischen denen das Bauteil (1) festlegbar ist, **dadurch gekennzeichnet, dass** an dem Wanddurchführungselement (2) ein umlaufener Kragen als erstes Befestigungselement (5) angeformt ist, und dass der Zwischenbereich (10) eine plastisch verformbare Stauchzone aufweist, aus der durch Krafteinleitung auf die Stauchzone ein weiteres Befestigungselement (13) mit Abstand zum ersten Befestigungselement (5) durch Stauchung ausgebildet ist, so dass zwischen dem ersten (5) und dem durch Stauchung gebildeten zweiten Befestigungselement (13) das Bauteil (1) abzustützen ist.

2. Wanddurchführungselement (2) nach Anspruch 1, **dadurch gekennzeichnet, dass** die Stauchzone des Zwischenbereiches (10) gewindelos ausgebildet ist.

3. Wanddurchführungselement nach Anspruch 1 oder 2, **dadurch gekennzeichnet, dass** die Stauchzone des einen inneren Führungskanal (11) aufweisenden Zwischenbereiches (10) einen größeren Innendurchmesser aufweist als ein innerer Führungskanal (12) eines sich daran anschließenden Anschlussbereiches (4).

4. Wanddurchführungselement (2) nach Anspruch 3, **dadurch gekennzeichnet, dass** an dem Anschlussbereich (4) ein Innengewinde (8) vorgesehen ist, das sich bis zu dem inneren Führungskanal (11) mit vergrößertem Innendurchmesser des Zwischenbereiches (10) erstreckt.

5. Wanddurchführungselement (2) nach Anspruch 3 oder 4, **dadurch gekennzeichnet, dass** der innere Führungskanal (11) mit größerem Innendurchmesser des Zwischenbereiches (10) vor dem Stauchen der Stauchzone mit Ausbildung des weiteren Befestigungselementes (13) ein Innengewinde (7) aufweist, das sich bis zum Ende eines sich daran anschließenden Ausschlussbereiches (3) erstreckt.

6. Wanddurchführungselement (2) nach Anspruch 5, **dadurch gekennzeichnet, dass** der sich an die Stauchzone des Zwischenbereiches (10) anschließende Anschlussbereich (4) ein Außengewinde (9) aufweist, das bis oder nicht bis an die Stauchzone mit dem inneren Führungskanal (11) mit vergrößertem Innendurchmesser reicht.
